# EUROPEAN PATENT SPECIFICATION

(11) **EP 4 030 587 B1**
(45) Date of publication and mention of the grant of the patent: **07.10.2026**
(21) Application number: 21217951.9
(22) Date of filing: 28.12.2021
(51) Int. Cl.: H02J 50/40, H02J 50/10, H02J 50/80

(54) **DYNAMIC CONTROL OF WIRELESS POWER TRANSFER EFFICIENCY**
DYNAMISCHE STEUERUNG DER EFFIZIENZ VON DRAHTLOSER LEISTUNGSÜBERTRAGUNG
COMMANDE DYNAMIQUE DE L'EFFICACITÉ DE TRANSFERT DE PUISSANCE SANS FIL

(30) Priority: 19.01.2021 US 202117152595
(43) Date of publication of application: 20.07.2022
(73) Proprietor: Datalogic IP Tech S.r.l., 40012 Calderara di Reno (BO) (IT)
(72) Inventor: RINALDI, Alessandro, 40069 Zola Predosa (BO) (IT); BALZANO, Domenico Gianluca, 41013 Castelfranco Emilia (MO) (IT); MARINO, Michele, 00159 Roma (RM) (IT); MOSCHINI, Roberto, 40128 Bologna (BO) (IT); PIFFERI, Marco, 40069 Zola Predosa (BO) (IT); PUGLIESE, Francesco, 40133 Bologna (BO) (IT)
(74) Representative: Riccardi, Elisa

(56) References cited:
- US-A1- 2017 025 901
- US-A1- 2020 044 482
- US-A1- 2020 127 501
- US-A1- 2020 177 028
- US-A1- 2020 343 777

## Description

### TECHNICAL FIELD

Embodiments described herein generally relate to powering of electronic devices and, more particularly, to wireless power transfer.

### BACKGROUND

Wireless power transfer (WPT) is a practical and convenient solution for powering and recharging the batteries of portable electronic devices. WPT uses a noncontact technique to deliver energy from a base station to a power-recipient device. Most typically, WPT applications utilize inductive coupling arrangements in which coil antennas at the base station and power-recipient device are placed into close proximity to form a transformer through which power may be transferred. US2020/044482A1 relates to efficiencies and flexibilities in inductive (wireless) charging; US2017/0025901A1 relates to a low power inductive power receiver. The electronics industry has developed WPT standards, such as Qi by the Wireless Power Consortium, and Rezence, promoted by The Alliance for Wireless Power and the Power Matters Alliance. A variety of proprietary WPT technologies also exist.

Advantageously, the transmitter coil in the base station and the receiver coil in the power-recipient device may be separated from one another by the respective housings of the base station and device. Thus, a user of a device employing a WPT system can avoid having to plug and un-plug the device from the power source using an electrical connector, and likewise need not worry about the degradation of exposed electrical contacts due to mechanical wear or corrosion. WPT systems are particularly advantageous in wet or dusty environments, and in environments where the device is frequently coupled and decoupled from a power source.

A common application for WPT systems is in charging cradles or pads for handheld devices that are powered by rechargeable batteries. Recent advances in battery technology have increased the energy density of the battery cells, and have developed electrode and electrolyte materials and geometries that enable rapid charging of battery cells using high currents. Whereas traditional battery-chargers have utilized relatively low power, such as 5 V and 500 mA for charging cycles that lasted many hours, it is not unusual to see modern chargers using higher voltages and currents, such as 12 V and 1.5 A. For instance, the Qi standard includes a baseline power profile (BPP) up to 5 W, and extended power profile (EPP) up to 15 W, and a Class 0 EPP up to 30 W. It is expected that energy demands for battery charging and other uses in the future will call for greater power levels. A proprietary power-delivery extension (PPDE) certification program has been introduced by the Wireless Power Consortium to facilitate the use of higher power levels, subject to additional safety testing.

In many applications, there remains a need for charging systems to be backwards compatible with traditional low-power supplies, such as universal serial bus (USB) versions 1.0 or 2.0, which are commonly found in personal computers, portable chargers, ubiquitous power adapters, and the like. Conventionally, the amount of power that can be transferred between the base station and the power-recipient device is arranged during a negotiation protocol that occurs during communication phases occurring before power transfer is initiated. The power-recipient device requests a certain amount of power, and the base station delivers the requested amount. This communication assures interoperability between lower-power and higher-power base stations/devices.

Typically, the WPT systems of power-receiving devices and corresponding base stations have WPT system properties that are optimized for an expected power level. For instance, the WPT system may have a particular coil antenna geometry, WPT frequency, signal-conditioning circuitry, such as power regulation or conversion circuitry, or the like, that works most efficiently at a certain wattage.

Whether a device uses lower-power or higher-power WPT, various challenges must be dealt with. For example, higher-power WPT devices must contend with heating caused by the WPT system. There is a practical temperature range in which batteries may be safely and reliably charged, and the high end of this range tends to be not much warmer than certain high-temperature environments, such as factories, kitchens, warm outdoor locations, and the like. The temperature rise attributed to inefficiencies of the WPT system may prevent charging to be performed at the maximum rate. In lower-power WPT devices, the inefficiencies of the WPT system may limit the available power from the power source for charging the batteries at an acceptable rate, or such inefficiencies may prevent a device from being powered on and used while also receiving power for charging of its battery.

Solutions are needed to address these, and other challenges in WPT systems.

### SUMMARY

Aspects of the embodiments are generally directed to wireless power transfer (WPT) efficiency optimizations. In some embodiments, an apparatus for a WPT transmitter includes a power input arranged to receive electrical power from a power source, first transmitter (TX) path circuitry arranged to be coupled to the power input and to a first set of at least one transmission coil, second TX path circuitry arranged to be coupled to the power input and to a second set of at least one transmission coil, transmitter mode selector circuitry arranged to selectively couple one of the first TX path circuitry and the second TX path circuitry between the power input and the first or the second set of at least one transmission coil in response to a path selection signal, and controller circuitry communicatively coupled to the power input and to the transmitter mode selector circuitry. The controller circuitry is operative to determine a power level of the power source from among a first power level and a second power level, and to generate the path selection signal based on the determined power level of the power source. The first TX path circuitry is operative to provide WPT transmission at a greater efficiency to a WPT receiver when the power source is at the first power level than when the power source is at the second power level. The second TX path circuitry is operative to provide WPT transmission at a greater efficiency to a WPT receiver when the power source is at the second power level than when the power source is at the first power level.

In a related embodiment, a WPT receiver includes a power output arranged to provide WPT-received electrical power to a load, first receiver (RX) path circuitry arranged to be coupled to the power output and to a first set of at least one reception coil, second RX path circuitry arranged to be coupled to the power output and to a second set of at least one reception coil, receiver mode selector circuitry arranged to selectively couple one of the first RX path circuitry and the second RX path circuitry between the power output and the first or the second set of at least one reception coil in response to a path selection signal, and controller circuitry communicatively coupled to the receiver mode selector circuitry, and operative to generate the path selection signal based on a power requirement of the load. One of the first RX path circuitry and the second RX path circuitry is operative to selectively receive WPT transmission from a WPT transmitter based on the path selection signal. The first RX path circuitry is operative to receive the WPT transmission at a greater efficiency when the received WPT is at a first power level than when the received WPT is at a second power level, and the second RX path circuitry is operative to receive the WPT transmission at a greater efficiency when the received WPT is at the second power level than when the received WPT is at the first power level.

In another embodiment, a WPT includes a power output arranged to provide WPT-received electrical power to a load, RX path circuitry coupled to the power output and to a set of at least one reception coil, and to receive WPT via the set of at least one reception coil, and controller circuitry arranged to read measurements of voltage at the load and of current being drawn by the load, and to dynamically adjust a characteristic of the WPT in response to the measurements.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings.
FIG. 1A is a perspective-view diagram illustrating a wireless power transfer (WPT) charging station for a power-receiving device (PRD) that is a gun-style handheld information device (HID) having a grip, according to some embodiments.
FIG. 1B is a diagram illustrating a WPT charging station that is a cradle-style charging station according to some embodiments.
FIG. 1C is a diagram illustrating a pad-style WPT charging station for HIDs according to some embodiments.
FIG. 2 is a high-level block diagram illustrating a WPT system according to an embodiment.
FIG. 3 is a block diagram illustrating a wireless power (WP) transmitter and control circuit of the WPT system of FIG. 2 according to some embodiments.
FIG. 4 is a block diagram illustrating a WP receiver and control circuit of the WPT system of FIG. 2 according to some embodiments.
FIG. 5 is a sequence diagram illustrating startup, power adjustment, and optimization operations of a WPT system according to various embodiments.
FIG. 6 is a flow diagram of another WPT-optimization process that may be carried out by WP receiver and control circuit according to a related embodiment.
FIG. 7 is a simplified circuit diagram illustrating an example WPT system in which the WP transmitter and receiver's magnetic (or, in some embodiments, electromagnetic) coupling is dynamically adjustable to optimize performance for the selected WPT mode.
FIG. 8 is a simplified schematic diagram illustrating an electronic switch for inserting a shunt capacitance in the RX side of the WPT system depicted in FIG. 7 according to an embodiment.
FIG. 9 is a diagram showing two plots that illustrate the effect of the addition of a shunt capacitance into the RX side of the WPT circuit of FIG. 7 according to an example.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

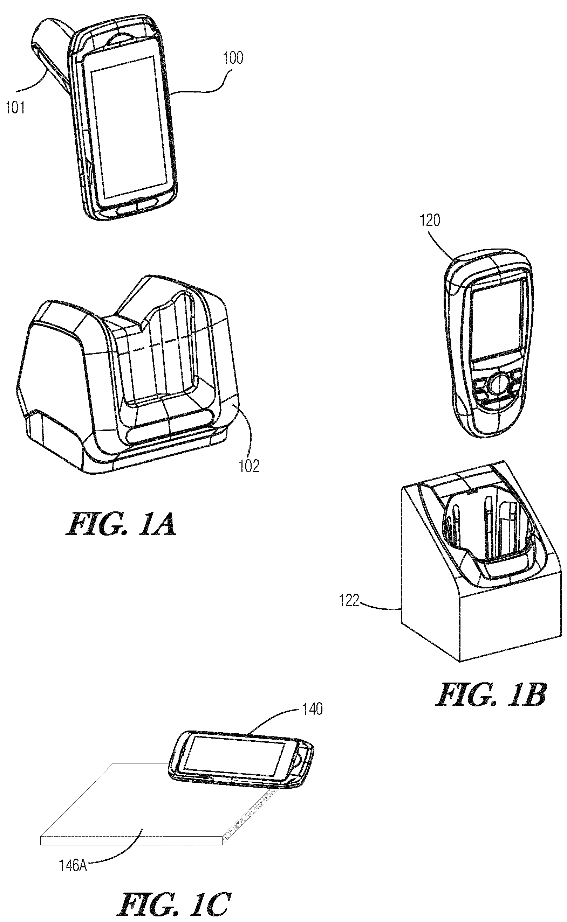

FIGS. 1A-1C are perspective-view diagrams illustrating various styles of charging stations for handheld information devices (HIDs). FIG. 1A illustrates a gun-style HID 100 that has grip 101. Station 102 in this example is a charging station having a form that is made to correspond with the exterior shape of HID 100. In particular, station 102 has a body that includes a receiving surface designed conform with grip 101 and portions of the underside of HID 100.

Charging stations and HIDs according to various embodiments may take a variety of other form factors. FIG. 1B is a diagram illustrating a partially-enclosed charging cradle-style HID station 122 for HID 120. HID station 122 has a body that accommodates HID 120, which has a more compact form factor than HID 100. When HID 120 is engaged with charging cradle 122, a portion of HID 120 sits inside the partial enclosure. FIG. 1C is a diagram illustrating a pad-style wireless charging station 142 for use with HID 140. Charging station 142 has a top surface on which HID 140 may be placed, and this surface may include printed graphics or other visual indicia to assist the operator to properly place HID 140, but it otherwise lacks any structural alignment feature to enforce the proper placement.

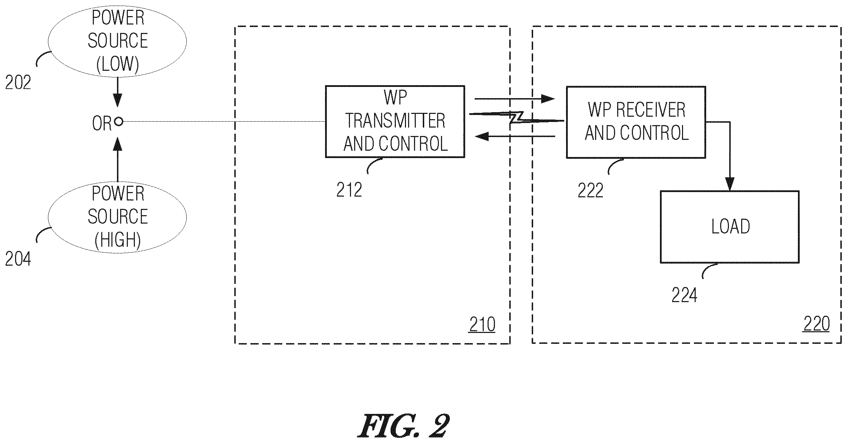

Each pair of HIDs 100, 120, and 140, and charging stations 102, 122, and 142, respectively, utilize a wireless power transfer (WPT) system according to aspects of this disclosure that can provide power over a wide range of power levels. FIG. 2 is a high-level block diagram illustrating WPT system 200 according to an embodiment. WPT system 200 includes a WP transmitter and control circuit 212, which is in base station 210, and WP receiver and control circuit 222, which is in HID 220. Base station 210 in this example may represent base station 102, 122, or 142 (FIG. 1), and HID 220 may represent HIDs 100, 120, or 140 (FIG. 1).

Base station 210 may be powered from low-power source 202, or from high-power source 204. In the present context, low-power source is a supply that is less than or equal to about 5 W (e.g., ≤ 5W +5%). Examples of such a low-power source include universal serial bus (USB) ports according to USB 1.0 or 2.0 specifications for 5 V (≤ 500 mA), or USB 3.0 specifications for 5 V (≤ 900 mA). High-power source 204 in the present context is a supply that is greater than about 5 W, such as a USB power delivery (USB-PD) port that can support such higher wattages at 5 V and at various other voltages, such as 9 V, 15 V, and 20V, with available current supplies of up to 5 A. Other power supplies, such as proprietary power supplies at other voltages may likewise be supported.

According to one aspect of this disclosure, the WPT system is automatically and dynamically reconfigurable for efficiency optimization in a WPT mode (e.g., low-power mode or a high-power mode). Efficiency optimization in the present context means effecting a change in the WPT circuitry based on the present power source to improve the power-transfer efficiency along a path from the power supply 202 or 204 to load circuit 224, which path includes WPT from WP transmitter and control circuit 212 to WP receiver and control circuit 222. The improvement in power-transfer efficiency achieved by a certain optimized WPT mode for the present power source, power demands, and other prevailing conditions is in comparison to the WPT operational efficiency that would have been present in the absence of the optimized WPT mode.

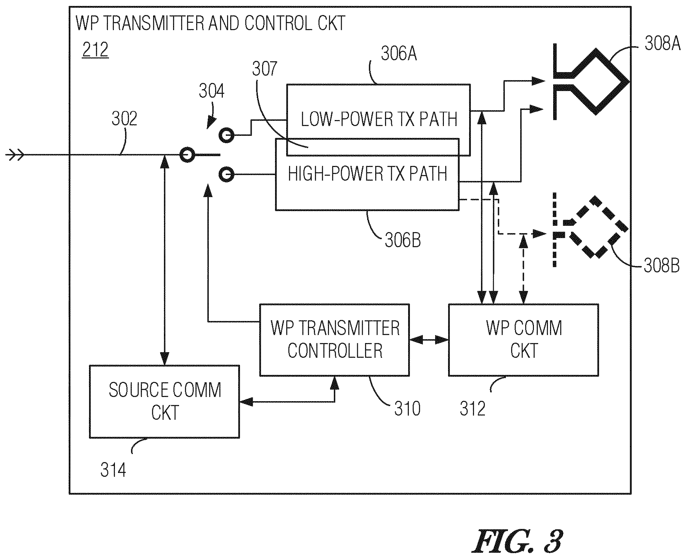

FIG. 3 is a block diagram illustrating WP transmitter and control circuit 212 in greater detail according to some embodiments. WP transmitter receives supply power via power input 302 from a variety of sources, which may include low-power and high-power supplies. As part of efficiency optimization, WP transmitter and control circuit 212 provides WPT mode selection as represented by mode selector 304, and separate transmitter (TX) paths 306A and 306B, each TX path being optimized for a different power level.

Each TX path 306A, 306B includes circuitry that converts the supply power received via power input 302 to a high-frequency WPT carrier waveform to be wirelessly transmitted to a WPT receiver via coil antenna 308A or 308B. In the present context, the term coil antenna refers to an inductive coil (for magnetic coupling in near-field configurations) or a radiative coil (for electromagnetic coupling in far-field configurations). For instance, each TX path 306A, 306B main include power conditioning circuitry such as a voltage regulator, voltage converter (e.g., buck converter, boost converter, charge pump, etc.), or a combination of these. In addition, each TX path 306A, 306B includes circuitry for generating the WPT carrier waveform, which is coupled to a coil antenna 308A, 308B.

In the example shown, low-power TX path 306A is optimized for operation at low power. For example, low-power TX path 306A may be specifically designed for operation with a 5 VDC input at a defined limited current, such as 1 A. Accordingly, low-power TX path 306A may omit power-conditioning circuitry. In other examples, low-power TX path 306A may include simple and efficient power-conditioning circuitry, such as a single ended primary inductive converter (SEPIC) implemented using relatively small switching transistor with small gate capacitance and fast switching performance.

High-power TX path 306B is optimized for versatility over a range of input voltages. Accordingly, high-power TX path 306B may include a switching regulator (e.g. SEPIC, Cuk, buck-boost), with larger switching transistor size to accommodate higher current. A switching regulator such as this may work to convert a wide range of input voltages to one or more specific voltages to be passed to downstream circuitry for conversion to high-frequency AC signaling and wireless power transmission.

In a related embodiment, low-power TX path 306A and high-power TX path 306B may share certain components, as represented by overlap 307 of the block diagram.

Other optimizations as between TX paths 306A and 306B may include different types of switching transistors and other components needed for generation of the WPT carrier waveform, different carrier frequencies and, optionally, different coil-antenna geometries in embodiments where multiple coil antennas are provided. As illustrated, both TX paths 306A, 306B may use the same coil antenna 308A, or they may use different coil antennas 308A, 308B, respectively.

The WPT mode selection is implemented by WP transmitter controller 310. In some implementations, WP transmitter controller 310 is an embedded microcontroller or other instruction processor and non-volatile memory containing program instructions that, when executed by the instruction processor cause the processor to determine the input supply power and select the appropriate TX path 306A, 306B. In other implementations, WP transmitter controller 310 is implemented as a digital logic circuit (e.g., as an application-specific integrated circuit (ASIC), field-programmable gate array (FPGA), Complex Programmable Logic Device (CPLD), programmable logic array (PLA), programmable array logic (PAL), or the like).

WP transmitter controller 310 may communicate with the power supply via source communication circuitry 314, for example, to negotiate an extended range of supply power via a supported protocol (e.g., USB). Also, WP transmitter controller 310 may communicate with WP receiver and control circuit 222 via WP communication circuit 312. WP communication circuit 312 may support bi-directional communications (half-duplex or full-duplex) over the WPT channel.

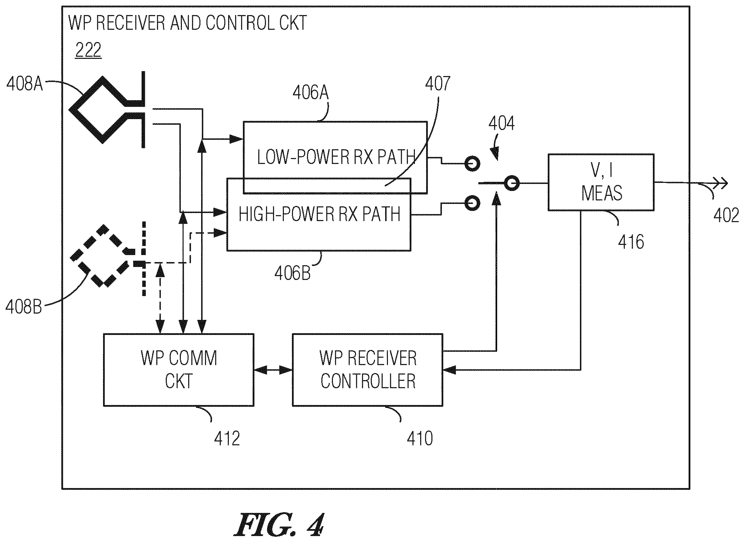

FIG. 4 is a block diagram illustrating WP receiver and control circuit 222 in greater detail according to some embodiments. WP receiver and control circuit 222 includes one or more coil antennas 408A, 408B arranged to be paired with one or more coil antennas 308A, 308B of WP transmitter and control circuit 212 (FIG. 3). In a single-antenna arrangement, coil antenna 408A is coupled to low-power receiver (RX) path 406A and high-power RX path 406B; in a multi-antenna arrangement, coil antenna 408A is coupled to low-power RX path 406A, and coil antenna 408B is coupled to high-power RX path 406B.

Each RX path 406A, 406B includes power-conditioning circuitry that is operative to extract received power via the WPT and convert the received high-frequency waveform into DC power for use by the load. Such circuitry may include a rectifier, filter, and voltage regulator. Each RX path 406A, 406B is optimized for a different power level, in similar principle to optimization of TX paths 306A and 306B (FIG. 3). Accordingly, in one embodiment, the circuitry of low-power RX path 406A may have smaller and more efficient components, optimized for operation at relatively lower received power levels. In a related embodiment, circuitry of high-power RX path 406B may have more robust components that are able to safely withstand higher voltages and currents.

As represented by overlap 407, RX paths 406A and 406B may share some portion of the RX-path circuitry in common.

In one type of embodiment, as described in greater detail below, one or both RX paths 406A, 406B have a reactance circuit to optimize the WP transmission efficiency using the principle of resonance.

Selection of a RX path 406A, 406B is represented in this diagram by mode selector 404, which is controlled by WP receiver controller 410. In some implementations, WP receiver controller 410 is an embedded microcontroller or other instruction processor and non-volatile memory containing program instructions that, when executed by the instruction processor cause the processor to determine the input supply power and select the appropriate RX path 406A, 406B. In other implementations, WP receiver controller 410 is implemented as a digital logic circuit (e.g., as an application-specific integrated circuit (ASIC), field-programmable gate array (FPGA), Complex Programmable Logic Device (CPLD), programmable logic array (PLA), programmable array logic (PAL), or the like).

WP receiver controller 410 may communicate with WP transmitter and control circuit 212 via WP communication circuit 412. WP communication circuit 412 may support bi-directional communications (half-duplex or full-duplex) over the WPT channel. These communications may be used to negotiate power-level settings between WP transmitter and control circuit 212 and WP receiver and control circuit 222, as well as to communicate other relevant WPT messaging.

In some embodiments, WP receiver controller 410 is operative to control the received power based on voltage or current measurements, or both, at the load. Accordingly, in some embodiments, as shown, electrical measurement circuitry 416 at the output of the WP receiver circuitry 402 provides voltage, current, or voltage and current measurements to WP receiver controller 410.

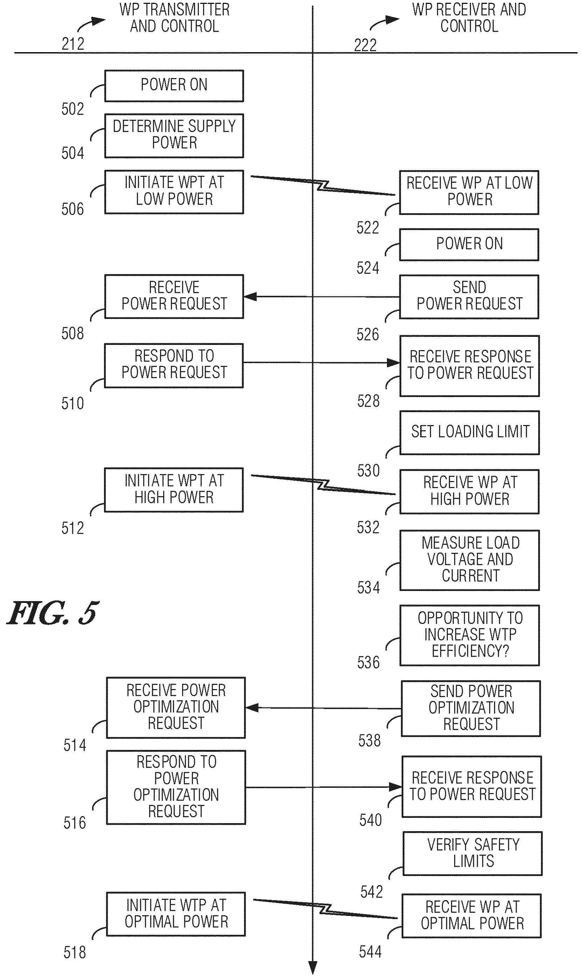

FIG. 5 is a sequence diagram illustrating startup, power adjustment, and optimization operations according to various embodiments. Notably, FIG. 5 illustrates a full-featured example with a number of operations, which may or may not all be present in a given implementation. In addition, the illustrated operations are presented in an exemplary order, which may or may not be followed in the exact sequence according to various implementations. Thus, it should be understood that various other embodiments may have fewer operations, operations in a different order, or both variations from the embodiment depicted in FIG. 5.

The sequence diagram shows operations carried out by WP transmitter and control circuit 212 in the left-hand column, and operations carried out by WP receiver and control circuit 222 in the right-hand column. Certain operations are interactive between WP transmitter and control circuit 212 and WP receiver and control circuit 222, as shown.

Operations 502-512 and 522-532 exemplify initial startup and power mode selection by WP transmitter and control circuit 212 and WP receiver and control circuit 222, respectively. At 502, WP transmitter and control circuit 212 is powered on. At 504, WP transmitter and control circuit 212 determines the available supply power. This operation may be involve conducting communications with a USB host device in accordance with USB connectivity protocol, for instance, where WP transmitter and control circuit 212 may negotiate a maximum available power level from its power source. In non-USB embodiments, WP transmitter and control circuit 212 may measure the input voltage and conduct a message exchange with the power source to determine if the power source is a compatible power source.

At 506, regardless of the type of power supply, WP transmitter and control circuit 212 powers up the WPT TX path circuitry in the low-power mode, and initiates WPT when a HID 220 is placed in WPT proximity and when the WPT proximity placement of HID 220 is detected. Accordingly, at 522 WP receiver and control circuit 222 receives wireless power transmitted in the low-power mode. At 524, if the WP receiver and control circuit 222 is not already powered from the HID's battery, it powers up using its low-power mode to receive the WPT initiated by WP transmitter and control circuit 212 at 506.

At 526, WP receiver and control circuit 222 sends a power-request message. In one type of embodiment, the power-request message is sent using signaling over the WPT channel. For instance, the power-request message may be a part of a standard Qi startup protocol for power recipient devices. In another embodiment, the power-request message may be sent over another link, such as over a personal-area network (PAN) such as Bluetooth Low Energy, for instance, as standardized under IEEE 802.15.4, under a WiFi standard such as IEEE 802.11, near-field communications (NFC) as standardized under ECMA-340 or ISO/IEC 18092, or other suitable communication channel. The power-request message may include an indicator corresponding to the maximum power level that HID 220 can accept via WPT.

At 508, WP transmitter and control circuit 212 receives the power-request message, and responds at 510. The response may likewise be transmitted over the WPT channel or over any other suitable channel such as those listed above, and the response may include a message indicating a power level that the base station is able to provide to HID 220. The available power-level indicator may state or represent the voltage and maximum current that is available over the WPT channel. The WP receiver and control circuit 222 receives the response message at 528. Based on the limits of the available power, WP receiver and control circuit 222 sets a limit for the WP receiver on the amount of current that it may draw so that the available power is not exceeded.

At 512, WP transmitter and control circuit 212 initiates WPT at the available high power in accordance with the determination made at operation 504 and the negotiation at operations 508-510. The WP receiver and control circuit 222 receives this higher power at 532 via the WPT.

Operations 534-544 by WP receiver and control circuit 222 and operations 514-518 by WP transmitter and control circuit 212 correspond to a dynamic WPT optimization technique that may be performed interactively between WP transmitter and control circuit 212 and WP receiver and control circuit 222 according to an example implementation. In one such embodiment, WP transmitter and control circuit 212 and WP receiver and control circuit 222 negotiate a new operating point for the WPT. This new operating point may depend on the power needs of HID 220, the currently available power level from WP transmitter and control circuit 212, and on optimization criteria that is stored by WP transmitter and control circuit 212. Accordingly, at 534, WP receiver and control circuit 222 reads measurements of the load voltage and current. Based on these measurements, at 536, WP receiver and control circuit 222 determines if there is an opportunity to increase the WPT efficiency. In general, the opportunity to increase the WPT efficiency for a given level of power transfer is based on the ability of the base station to source higher current at a lower voltage.

In one approach, WP receiver and control circuit 222 determines whether an optimization opportunity exists by comparing the measured voltage at the load with a reference voltage. As an example, the reference voltage is a voltage value corresponding to the negotiated power level, for instance, as received by WP receiver and control circuit 222 at 528. In another example, the reference voltage is a measured voltage in the RX path 406A, 406B (FIG. 4) that is being used to receive the WPT power. Such a measured voltage in the RX path 406A, 406B may be at the coil antenna terminals, at an output of a rectifier, or at an input of a power-conditioning circuit.

The comparing of the measured voltage at the load with the reference voltage may involve addition or subtraction of a voltage offset value to or from one of the compared quantities. The comparing may instead or also involve the use of a scaling factor applied to one of the compared quantities. In general, the aim of the comparison is to determine if the measured load voltage is less than the reference voltage by some significant amount, which is indicative of inefficiencies, such as the operation of a voltage regulator in the RX path, to significantly drop the voltage of the WPT-received power in order to provide the appropriate amount of current to the load.

Thus, for example, efficiency may be gained by reducing the WPT-received voltage to be at a level that matches or slightly exceeds the voltage corresponding to the required current draw at the load. A further mechanism by which efficiency may be gained is by transmitting a set power level via WPT at a lower voltage and higher current, with the higher current tending to improve the magnetic or electromagnetic coupling of the coil antennas.

Upon determining that optimizations are available, WP transmitter and control circuit 212 sends a power optimization request to WP receiver and control circuit 222 at 538, which, in turn, is received at 514. The power optimization request may utilize the same or similar messaging as the power request at 526 described above, or it may utilize different messaging. For example, in one embodiment, WP receiver and control circuit 222 specifies a particular voltage to be transmitted as part of the optimization request at 538. In another embodiment, WP receiver and control circuit 222 specifies increment voltage amounts by which to increase or reduce the transmitted voltage of the WPT as part of the optimization request at 538. At 516, WP transmitter and control circuit 212 responds to the optimization request by sending a message confirming the requested transmission voltage setting, rejecting it, or proposing an alternative power transmission setting at 516, which WP receiver and control circuit 222 receives at 540. At 542, WP receiver and control circuit 222 verifies that the confirmed or modified WPT settings are within predefined safety limits. If necessary, a new power optimization request at 538 may be generated by WP receiver and control circuit 222 in response to a determined failure to meet safety limits.

At 518, WP transmitter and control circuit 212 initiates WTP at the optimal power settings, which in this example are the power settings agreed to in the optimization negotiation protocol carried out in operations 514-516 of WP transmitter and control circuit 212 and operations 538-540 of WP receiver and control circuit 222. At 544, assuming the safety limits are not violated, WP receiver and control circuit 222 receives the WPT at the optimized settings.

Operations 534-544 and 514-518 of the sequence may be performed iteratively by WP receiver and control circuit 222 and WP transmitter and control circuit 212, respectively, as the loading conditions of HID 220 may vary over time, causing the optimal WPT operating point to shift.

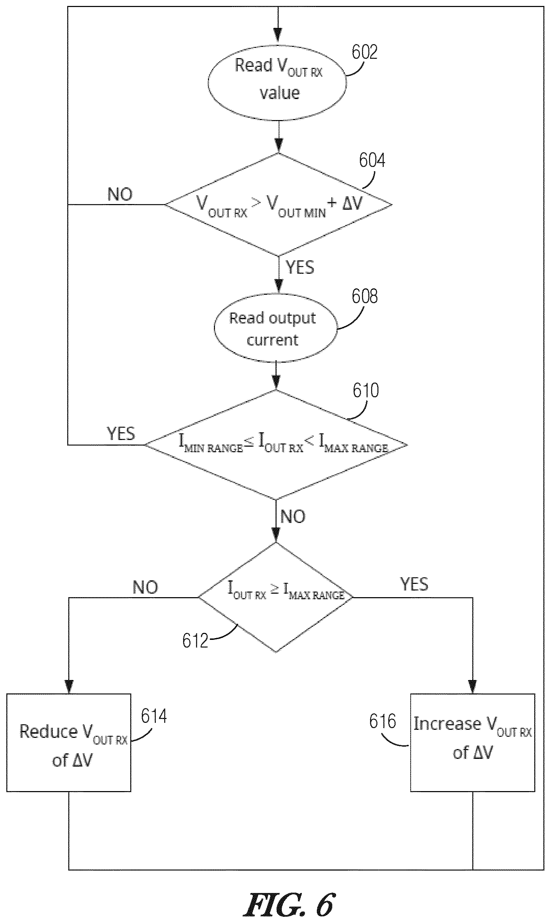

FIG. 6 is a flow diagram of another WPT-optimization process that may be carried out by WP receiver and control circuit 222 according to a related embodiment. The process of FIG. 6 aims to dynamically determine an operating point for WP receiver and control circuit 222 in which the voltage at the load is minimized while the current at the output of WP receiver and control circuit 222 is maximized within practical constraints. This process utilizes monitoring of both, current and voltage, at the output of WP receiver and control circuit 222. A control system is arranged to vary the voltage at the output of WP receiver and control circuit 222 while monitoring the output current to the load.

At 602, the voltage at the output of WP receiver and control circuit 222, V_{OUT RX}, is read. At decision 604, WP receiver and control circuit 222 determines if V_{OUT RX} is greater than the current minimum voltage required to operate HID 220 (e.g., whether in battery-charging-only mode or in active operation), plus a reliability margin, ΔV. The reliability margin ΔV is an empirically-determined and predefined quantity. In the affirmative case as a result of decision 604, the process advances to 608, where the output current I_{OUT RX}, that is, the current being drawn by the load, is read.

Decision 610, determines if the output current I_{OUT RX} falls in an acceptable range within which the current I_{OUT RX} can vary without calling for any change in operating point. If the result of decision 610 is negative (i.e., the current is outside of the acceptable range), the output current I_{OUT RX} is compared against a predefined maximum allowed current value I_{MAX} at 612, which may be set, for instance, by WP transmitter and control circuit 212 based on its available power source. In the negative case, the process branches to 614, which reduces V_{OUT RX} in RX path 406A, 406B (FIG. 4) in order to cause an increase in I_{OUT RX} due to the drawing of more current by a power regulator, for instance. Otherwise, if I_{OUT RX} is greater than or equal to I_{MAX}, the process branches to 616 to increase V_{OUT RX} in RX path 406A, 406B and cause a reduction in I_{OUT RX}. The process then iterates to account for any changing operating conditions.

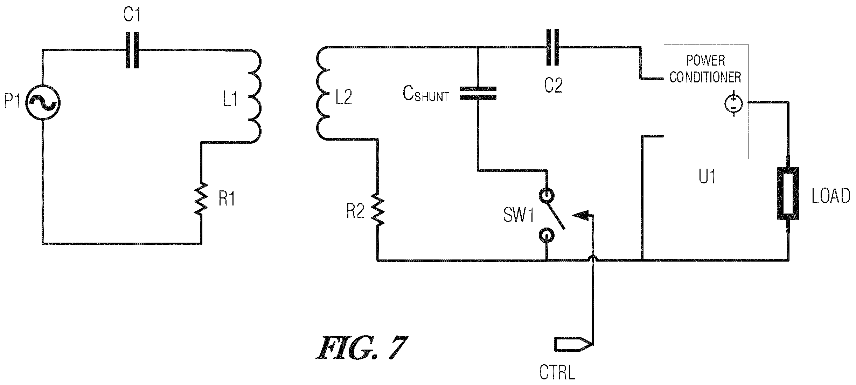

FIG. 7 is a simplified circuit diagram illustrating an example WPT system in which the WP transmitter and receiver's magnetic or, in some embodiments, electromagnetic coupling is dynamically adjustable to optimize performance for the selected WPT mode (e.g., low-power mode and high-power mode). As depicted, simplified WP transmitter includes an AC power source P1, which may have an operating power-transfer frequency in the tens to hundreds of kHz. On the transmitter side, a first series RLC circuit is provided including coil antenna L1, series capacitor C1, and resistor R1 representing the small parasitic resistance of the components and interconnects.

On the receiver side, a second series RLC circuit is provided including coil antenna L2, series capacitor C2, and R2 representing a small parasitic resistance of the components and interconnects. Power conditioner U1, which converts the received AC signal into a DC power signal, supplies power to the load, which may be a battery charging circuit. Notably, a shunt capacitor C_{SHUNT} is switchably added or removed from the circuit by switch SW1, which is controlled by control input CTRL.

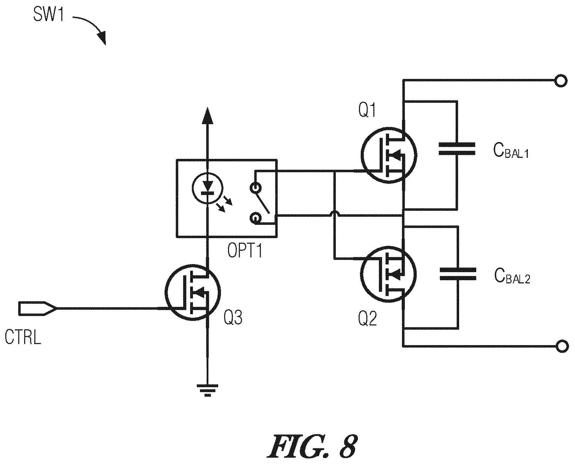

Switch SW1 may be implemented as a controllable insertion circuit as depicted in FIG. 8. Control input CTRL switches drive transistor Q3, which activates optoisolator OPT1. In turn, optoisolator OPT1 activates switching transistors Q1 and Q2, which form a shunt across the output terminals. Switching transistors Q1 and Q2 are preferably low-on-resistance devices, such as trench MOSFET transistors. Balancing capacitors C_{BAL1} and C_{BAL2} are small-value capacitors that balance the voltage across each open channel of Q1 and Q2 when these switching transistors are deactivated.

Referring again to FIG. 7, in operation, the shunt capacitor C_{SHUNT} is inserted into the circuit only when the selected WPT mode is the low-power mode. The shunt capacitance reduces the no-load losses of the WPT system by introduction of a reactance to create a resonance characteristic. The resonance characteristic is present regardless of the amount of loading, even at small or zero loads. As a result, the introduced resonance characteristic increases the TX to RX gain of the system as a whole, with a lower magnetization current on the TX side, hence improving overall WPT efficiency for low-power operations.

In a related embodiment, the shunt capacitance is switched out of the circuit in the high-power mode of operation. In a high-loading mode of operation, the addition of the shunt capacitance is negligible and tends to undesirably affect the AC response of the system.

Referring again to FIG. 4, the switching in and out of the shunt capacitance is an example of mode selection the RX path from among path 406A (which includes the shunt capacitance), and path 406B (excluding the shunt capacitance) with much of the rest of the circuitry on the RX side constituting overlapping RX path components 407.

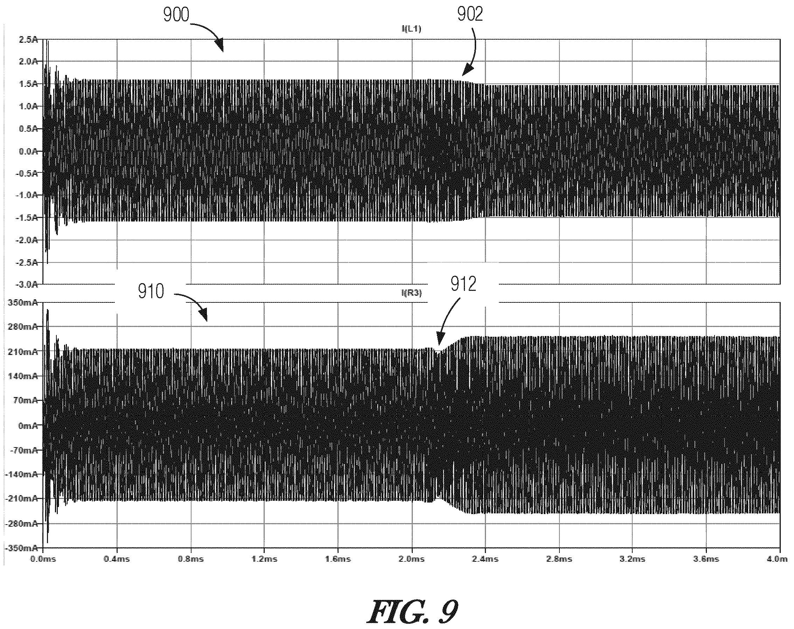

FIG. 9 shows two plots illustrating the effect of the addition of the shunt capacitance into the RX side of the WPT circuit of FIG. 7. Trace 900 shows the current in the TX coil antenna L1, and trace 910 shows the current at the input to power conditioner U1. The traces initially represent the respective currents without the shunt capacitance in the circuit. At the introduction of the shunt capacitance, as indicated at 902 and 912, the current in the TX coil antenna is reduced in amplitude, while the current at the input to U1 increases in amplitude. Notably, this change occurs with no change in the input voltage on the TX side. Hence, the change represents an increase in WPT efficiency.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

## Claims

1. Apparatus (102, 122, 142, 210, 212) for a wireless power transfer (WPT) transmitter, the apparatus (102, 122, 142, 210, 212) comprising:
a power input (302) arranged to receive electrical power from a power source (202, 204);
first transmitter (TX) path circuitry (306A) arranged to be coupled to the power input (302) and to a first set of at least one transmission coil (308B);
second TX path circuitry (306B) arranged to be coupled to the power input (302) and to a second set of at least one transmission coil (308A, 308B);
transmitter mode selector circuitry (304) arranged to selectively couple one of the first TX path circuitry (306A) and the second TX path circuitry (306B) between the power input (302) and the first or the second set of at least one transmission coil (308A, 308B) in response to a path selection signal; and
**characterised in that** the apparatus (102, 122, 142, 210, 212) further comprises:
controller circuitry (212, 310) communicatively coupled to the power input (302) and to the transmitter mode selector circuitry (304), the controller circuitry (310) operative to determine a power level of the power source (202, 204) from among a first power level and a second power level, and to generate the path selection signal based on the determined power level of the power source (202, 204);
wherein the first TX path circuitry (306A) is operative to provide WPT transmission at a greater efficiency to a WPT receiver (100, 120, 140, 220, 222) when the power source (202, 204) is at the first power level than when the power source (202, 204) is at the second power level; and
wherein the second TX path circuitry (306B) is operative to provide WPT transmission at a greater efficiency to a WPT receiver (100, 120, 140, 220, 222) when the power source (202, 204) is at the second power level than when the power source (202, 204) is at the first power level.

2. The apparatus (102, 122, 142, 210, 212) of claim 1, wherein the first power level is about 5 W or less, and wherein the second power level is greater than about 5W.

3. The apparatus (102, 122, 142, 210, 212) of claim 2, wherein the power input (302) is a universal serial bus (USB) power input operative to accept power via a USB connection at the first power level and at the second power level.

4. The apparatus (102, 122, 142, 210, 212) of any of claims 1-3, wherein the first TX path circuitry (306A) and the second TX path circuitry (306B) include at least one shared portion of circuitry (307).

5. The apparatus (102, 122, 142, 210, 212) of any of claims 1-4, wherein the controller circuitry (212, 310) is operative to:
determine (504) that the power level of the power source (202, 204) is the second power level which is greater than the first power level;
detect a presence of the WPT receiver (100, 120, 140, 220, 222) within WPT proximity;
in response to detection of the presence of the WPT receiver (100, 120, 140, 220, 222) within the WPT proximity, cause (506) the first transmitter path circuitry (306A) to initiate WPT transmission in a low-power mode to the WPT receiver (100, 120, 140, 220, 222);
receive (508) a power request from the WPT receiver (100, 120, 140, 220, 222) that requests a change in power to be wirelessly transmitted to the WPT receiver (100, 120, 140, 220, 222); and
in response to the power request, cause (510, 512) a change in the WPT power level to be wirelessly transmitted to the WPT receiver (100, 120, 140, 220, 222), including changing the path selection signal.

6. The apparatus (102, 122, 142, 210, 212) of claim 5, wherein the controller circuitry (212, 310) is further operative to:
in response to initiation of WPT transmission in the low-power mode to the WPT receiver (100, 120, 140, 220, 222), transmit (510) information identifying the determined power level of the power source (202, 204) to the WPT receiver (100, 120, 140, 220, 222).

7. The apparatus (102, 122, 142, 210, 212) of any of claims 5-6, wherein the controller circuitry (212, 310) is further operative to:
in response to the change of the WPT power level, receive (514) a power optimization request from the WPT receiver (100, 120, 140, 220, 222) that requests a second change in WPT power to be wirelessly transmitted to the WPT receiver (100, 120, 140, 220, 222), wherein the second change is a reduction of WPT carrier voltage; and
in response to the power optimization request, cause (516, 518) the second change in WPT power.

8. Apparatus (100, 120, 140, 220, 222) for a wireless power transfer (WPT) receiver, the apparatus (100, 120, 140, 220, 222) comprising:
a power output (402) arranged to provide WPT-received electrical power to a load (224);
first receiver (RX) path circuitry (406A) arranged to be coupled to the power output (402) and to a first set of at least one reception coil (408A);
second RX path circuitry (406B) arranged to be coupled to the power output (402) and to a second set of at least one reception coil (408A, 408B); and
receiver mode selector circuitry (404) arranged to selectively couple one of the first RX path circuitry (406A) and the second RX path circuitry (406B) between the power output (402) and the first or the second set of at least one reception coil (408A, 408B) in response to a path selection signal; and
controller circuitry (410, 416) communicatively coupled to the receiver mode selector circuitry (404), and operative to generate the path selection signal based on a power requirement of the load (224);
**characterised in that** one of the first RX path circuitry (406A) and the second RX path circuitry (406B) is operative to selectively receive WPT transmission from a WPT transmitter (102, 122, 142, 210, 212) based on the path selection signal;
wherein the first RX path circuitry (406A) is operative to receive the WPT transmission at a greater efficiency when the received WPT is at a first power level than when the received WPT is at a second power level; and
wherein the second RX path circuitry (406B) is operative to receive the WPT transmission at a greater efficiency when the received WPT is at the second power level than when the received WPT is at the first power level.

9. The apparatus (100, 120, 140, 220, 222) of claim 8, wherein the first power level is about 5 W or less, and wherein the second power level is greater than about 5W.

10. The apparatus (100, 120, 140, 220, 222) of any of claims 8-9, wherein the first TX path circuitry (406A) and the second TX path circuitry (406B) include at least one shared portion of circuitry (407).

11. The apparatus (100, 120, 140, 220, 222) of any of claims 8-10, wherein the first RX path circuitry (406A) includes a shunt capacitance across the first set of at least one reception coil (408A) that provides a resonance characteristic, and wherein the second RX path circuitry (406B) omits the shunt capacitance from the second set of at least one reception coil (408A, 408B).

12. The apparatus (100, 120, 140, 220, 222) of any of claims 8-11, wherein the first set of at least one reception coil (408A) and the second set of at least one reception coil (408A, 408B) include a common reception coil (408A).

13. The apparatus (100, 120, 140, 220, 222) of any of claims 8-12, wherein the controller circuitry (410, 416) is arranged to read a measurement of voltage at the load (224) and of current being drawn by the load (224).

14. The apparatus (100, 120, 140, 220, 222) of claim 13, wherein the controller circuitry (410, 416) is operative to further generate the path selection signal based on the measurement of voltage and current.

15. The apparatus (100, 120, 140, 220, 222) of any of claims 8-14, wherein the controller circuitry (410, 416) is arranged to be communicatively coupled to a WPT transmitter (102, 122, 142, 210, 212), to receive (528) information indicating available power from the WPT transmitter (102, 122, 142, 210, 212), and to generate the path selection signal based further on the available power from the WPT transmitter (102, 122, 142, 210, 212).

## Patentansprüche

1. Vorrichtung (102, 122, 142, 210, 212) für einen drahtlosen Energieübertragungssender (WPT), die Vorrichtung (102, 122, 142, 210, 212) umfassend:
einen Energieeingang (302), der eingerichtet ist, elektrische Energie von einer Energiequelle (202, 204) zu empfangen;
eine erste Sender (TX)-Pfadschaltung (306A), die eingerichtet ist, mit dem Energieeingang (302) und mit einem ersten Satz aus mindestens einer Sendespule (308B) gekoppelt zu werden;
eine zweite TX-Pfadschaltung (306B), die eingerichtet ist, mit dem Energieeingang (302) und einem zweiten Satz aus mindestens einer Sendespule (308A, 308B) gekoppelt zu werden;
eine Sender-Modus-Wählerschaltung (304), die eingerichtet ist, eine der ersten TX-Pfadschaltung (306A) und der zweiten TX-Pfadschaltung (306B) zwischen dem Energieeingang (302) und dem ersten oder dem zweiten Satz aus mindestens einer Sendespule (308A, 308B) als Reaktion auf ein Pfadwahlsignal wahlweise zu koppeln; und
**dadurch gekennzeichnet, dass** die Vorrichtung (102, 122, 142, 210, 212) ferner umfasst:
eine Steuerschaltung (212, 310), die kommunikativ mit dem Energieeingang (302) und der Sendemodus-Wählerschaltung (304) gekoppelt ist, wobei die Steuerschaltung (310) dazu konfiguriert ist, einen Energiestand der Energiequelle (202, 204) aus einem ersten Energiestand und einem zweiten Energiestand zu bestimmen und das Pfadwahlsignal basierend auf dem bestimmten Energiestand der Energiequelle (202, 204) zu erzeugen;
wobei die erste TX-Pfadschaltung (306A) dazu konfiguriert ist, eine WPT-Übertragung mit höherem Wirkungsgrad an einen WPT-Empfänger (100, 120, 140, 220, 222) bereitzustellen, wenn sich die Energiequelle (202, 204) auf dem ersten Energiestand befindet, als wenn sich die Energiequelle (202, 204) auf dem zweiten Energiestand befindet; und
wobei die zweite TX-Pfadschaltung (306B) dazu konfiguriert ist, eine WPT-Übertragung mit höherem Wirkungsgrad an einen WPT-Empfänger (100, 120, 140, 220, 222) bereitzustellen, wenn sich die Energiequelle (202, 204) auf dem zweiten Energiestand befindet, als wenn sich die Energiequelle (202, 204) auf dem ersten Energiestand befindet.

2. Vorrichtung (102, 122, 142, 210, 212) nach Anspruch 1, wobei der erste Energiestand etwa 5 W oder weniger beträgt und wobei der zweite Energiestand größer als etwa SW ist.

3. Vorrichtung (102, 122, 142, 210, 212) nach Anspruch 2, wobei der Energieeingang (302) ein Universal Serial Bus (USB)-Energieeingang ist, der dazu konfiguriert ist, über eine USB-Verbindung Energie auf dem ersten Energiestand und auf dem zweiten Energiestand aufzunehmen.

4. Vorrichtung (102, 122, 142, 210, 212) nach einem der Ansprüche 1 bis 3, wobei die erste TX-Pfadschaltung (306A) und die zweite TX-Pfadschaltung (306B) mindestens einen gemeinsamen Schaltungsabschnitt (307) umfassen.

5. Vorrichtung (102, 122, 142, 210, 212) nach einem der Ansprüche 1 bis 4, wobei die Steuerschaltung (212, 310) dazu konfiguriert ist, um:
zu bestimmen (504), dass der Energiestand der Energiequelle (202, 204) der zweite Energiestand ist, der größer als der erste Energiestand ist;
die Anwesenheit des WPT-Empfängers (100, 120, 140, 220, 222) in dem WPT-Nahbereich zu erfassen;
als Reaktion auf die Erfassung der Anwesenheit des WPT-Empfängers (100, 120, 140, 220, 222) in dem WPT-Nahbereich, die erste Sender-Pfadschaltung (306A) zu veranlassen (506), eine WPT-Übertragung in einem Energiesparmodus an den WPT-Empfänger (100, 120, 140, 220, 222) einzuleiten;
eine Energieanfrage von dem WPT-Empfänger (100, 120, 140, 220, 222) zu empfangen (508), die eine Änderung der Energie fordert, die drahtlos an den WPT-Empfänger (100, 120, 140, 220, 222) übertragen werden soll; und
als Reaktion auf die Energieanfrage zu veranlassen (510, 512), dass eine Änderung des WPT-Energiestandes drahtlos an den WPT-Empfänger (100, 120, 140, 220, 222) übertragen wird, einschließlich der Änderung des Pfadwahlsignals.

6. Vorrichtung (102, 122, 142, 210, 212) nach Anspruch 5, wobei die Steuerschaltung (212, 310) ferner dazu konfiguriert ist, um:
als Reaktion auf den Start einer WPT-Übertragung in dem Energiesparmodus an den WPT-Empfänger (100, 120, 140, 220, 222) Informationen, die den bestimmten Energiestand der Energiequelle (202, 204) identifizieren, an den WPT-Empfänger (100, 120, 140, 220, 222) zu übertragen (510).

7. Vorrichtung (102, 122, 142, 210, 212) nach einem der Ansprüche 5 bis 6, wobei die Steuerschaltung (212, 310) ferner dazu konfiguriert ist, um,
als Reaktion auf die Änderung des WPT-Energiestandes eine Energieoptimierungsanfrage von dem WPT-Empfänger (100, 120, 140, 220, 222) zu empfangen (514), die eine zweite Änderung der WPT-Energie fordert, die drahtlos an den WPT-Empfänger (100, 120, 140, 220, 222) übertragen wird, wobei die zweite Änderung eine Reduzierung der WPT-Trägerspannung ist; und
als Reaktion auf die Energieoptimierungsanfrage die zweite Änderung der WPT-Energie zu veranlassen (516, 518).

8. Vorrichtung (100, 120, 140, 220, 222) für einen drahtlosen Energieübertragungssender (WPT), die Vorrichtung (100, 120, 140, 220, 222) umfassend:
einen Energieausgang (402), der eingerichtet ist, eine über WPT empfangene elektrische Energie an eine Last (224) bereitzustellen;
eine erste Empfänger (RX)-Pfadschaltung (406A), die eingerichtet ist, mit dem Energieausgang (402) und mit einem ersten Satz aus mindestens einer Empfangsspule (408A) gekoppelt zu werden;
eine zweite RX-Pfadschaltung (406B), die eingerichtet ist, mit dem Energieausgang (402) und einem zweiten Satz aus mindestens einer Empfangsspule (408A, 408B) gekoppelt zu werden; und
eine Empfänger-Modus-Wählerschaltung (404), die eingerichtet ist, eine der ersten RX-Pfadschaltung (406A) oder der zweiten RX-Pfadschaltung (406B) zwischen den Energieausgang (402) und den ersten oder den zweiten Satz aus mindestens einer Empfangsspule (408A, 408B) als Reaktion auf ein Pfadwahlsignal wahlweise zu koppeln; und eine Steuerschaltung (410, 416), die kommunikativ mit der Empfänger-Modus-Wählerschaltung (404) gekoppelt ist und dazu konfiguriert ist, das Pfadwahlsignal basierend auf einem Energiebedarf der Last (224) zu erzeugen;
**dadurch gekennzeichnet, dass** eine der ersten RX-Pfadschaltung (406A) oder der zweiten RX-Pfadschaltung (406B) dazu konfiguriert ist, eine WPT-Übertragung von einem WPT-Sender (102, 122, 142, 210, 212) basierend auf dem Pfadwahlsignal wahlweise zu empfangen;
wobei die erste RX-Pfadschaltung (406A) dazu konfiguriert ist, die WPT-Übertragung mit einem höheren Wirkungsgrad zu empfangen, wenn sich der empfangene WPT auf einem ersten Energiestand befindet, als wenn sich der empfangene WPT auf einem zweiten Energiestand befindet; und
wobei die zweite RX-Pfadschaltung (406B) dazu konfiguriert ist, die WPT-Übertragung mit einem höheren Wirkungsgrad zu empfangen, wenn sich der empfangene WPT auf dem zweiten Energiestand befindet, als wenn sich der empfangene WPT auf dem ersten Energiestand befindet.

9. Vorrichtung (100, 120, 140, 220, 222) nach Anspruch 8, wobei der erste Energiestand etwa 5 W oder weniger beträgt und wobei der zweite Energiestand größer als etwa SW ist.

10. Vorrichtung (100, 120, 140, 220, 222) nach einem der Ansprüche 8 bis 9, wobei die erste TX-Pfadschaltung (406A) und die zweite TX-Pfadschaltung (406B) mindestens einen gemeinsamen Schaltungsabschnitt (407) umfassen.

11. Vorrichtung (100, 120, 140, 220, 222) nach einem der Ansprüche 8 bis 10, wobei die erste RX-Pfadschaltung (406A) eine Shunt-Kapazität über dem ersten Satz aus mindestens einer Empfangsspule (408A) umfasst, die eine Resonanzcharakteristik bereitstellt, und wobei die zweite RX-Pfadschaltung (406B) die Shunt-Kapazität aus dem zweiten Satz aus mindestens einer Empfangsspule (408A, 408B) weglässt.

12. Vorrichtung (100, 120, 140, 220, 222) nach einem der Ansprüche 8 bis 11, wobei der erste Satz aus mindestens einer Empfangsspule (408A) und der zweite Satz aus mindestens einer Empfangsspule (408A, 408B) eine gemeinsame Empfangsspule (408A) umfassen.

13. Vorrichtung (100, 120, 140, 220, 222) nach einem der Ansprüche 8 bis 12, wobei die Steuerschaltung (410, 416) eingerichtet ist, eine Messung für die Spannung an der Last (224) und für den Strom, der von der Last (224) aufgenommen wird, zu lesen.

14. Vorrichtung (100, 120, 140, 220, 222) nach Anspruch 13, wobei die Steuerschaltung (410, 416) dazu konfiguriert ist, ferner das Pfadwahlsignal basierend auf der Spannung- und Strommessung zu erzeugen.

15. Vorrichtung (100, 120, 140, 220, 222) nach einem der Ansprüche 8 bis 14, wobei die Steuerschaltung (410, 416) eingerichtet ist, kommunikativ mit einem WPT-Sender (102, 122, 142, 210, 212) gekoppelt zu werden, um Informationen zu empfangen (528), die die verfügbare Energie von dem WPT-Sender (102, 122, 142, 210, 212) anzeigen und das Pfadwahlsignal ferner basierend auf der verfügbaren Energie des WPT-Senders (102, 122, 142, 210, 212) zu erzeugen.

## Revendications

1. Appareil (102, 122, 142, 210, 212) destiné à un émetteur de transfert d'énergie sans fil (WPT), l'appareil (102, 122, 142, 210, 212) comprenant:
une entrée d'alimentation (302) agencée pour recevoir de l'énergie électrique à partir d'une source d'alimentation (202, 204);
un premier circuit de voie d'émission (TX) (306A) agencé pour être couplé à l'entrée d'alimentation (302) et à un premier ensemble d'au moins une bobine de transmission (308B);
un deuxième circuit de voie TX (306B) agencé pour être couplé à l'entrée d'alimentation (302) et à un deuxième ensemble d'au moins une bobine de transmission (308A, 308B);
un circuit de sélection de mode d'émission (304) agencé pour coupler de manière sélective l'un parmi le premier circuit de voie TX (306A) et le second circuit de voie TX (306B) entre l'entrée d'alimentation (302) et le premier ou le second ensemble d'au moins une bobine de transmission (308A, 308B) en réponse à un signal de sélection de voie; et
**caractérisé en ce que** l'appareil (102, 122, 142, 210, 212) comprend en outre:
un circuit de commande (212, 310) couplé de manière communicative à l'entrée d'alimentation (302) et au circuit de sélection du mode d'émission (304), le circuit de commande (310) étant conçu pour déterminer un niveau de puissance de la source d'alimentation (202, 204) parmi un premier niveau de puissance et un deuxième niveau de puissance, et à générer le signal de sélection de voie en fonction du niveau de puissance déterminé de la source d'alimentation (202, 204);
dans lequel le premier circuit de voie TX (306A) est conçu pour assurer une transmission WPT avec un rendement supérieur vers un récepteur WPT (100, 120, 140, 220, 222) lorsque la source d'alimentation (202, 204) est au premier niveau de puissance plutôt que lorsque la source d'alimentation (202, 204) est au deuxième niveau de puissance; et
dans lequel le deuxième circuit de voie TX (306B) est conçu pour assurer une transmission WPT avec un rendement supérieur vers un récepteur WPT (100, 120, 140, 220, 222) lorsque la source d'alimentation (202, 204) est au deuxième niveau de puissance plutôt que lorsque la source d'alimentation (202, 204) est au premier niveau de puissance.

2. Appareil (102, 122, 142, 210, 212) selon la revendication 1, dans lequel le premier niveau de puissance est d'environ 5 W ou moins, et dans lequel le deuxième niveau de puissance est supérieur à environ 5 W.

3. Appareil (102, 122, 142, 210, 212) selon la revendication 2, dans lequel l'entrée d'alimentation (302) est une entrée d'alimentation Universal Serial Bus (USB) permettant de recevoir de l'énergie via une connexion USB au premier niveau de puissance et au deuxième niveau de puissance.

4. Appareil (102, 122, 142, 210, 212) selon l'une quelconque des revendications 1 à 3, dans lequel le premier circuit de voie TX (306A) et le deuxième circuit de voie TX (306B) comprennent au moins une partie de circuit commune (307).

5. Appareil (102, 122, 142, 210, 212) selon l'une quelconque des revendications 1 à 4, dans lequel le circuit de commande (212, 310) est conçu pour:
déterminer (504) que le niveau de puissance de la source d'alimentation (202, 204) correspond au deuxième niveau de puissance, qui est supérieur au premier niveau de puissance;
détecter une présence du récepteur WPT (100, 120, 140, 220, 222) à proximité WPT;
en réponse à la détection de la présence du récepteur WPT (100, 120, 140, 220, 222) à proximité WPT, amener (506) le premier circuit de voie d'émission (306A) à lancer une transmission WPT en mode basse puissance vers le récepteur WPT (100, 120, 140, 220, 222); recevoir (508) une demande d'alimentation provenant du récepteur WPT (100, 120, 140, 220, 222) qui sollicite une modification de la puissance à transmettre sans fil au récepteur WPT (100, 120, 140, 220, 222); et
en réponse à la demande de puissance, provoquer (510, 512) une modification du niveau de puissance WPT à transmettre sans fil au récepteur WPT (100, 120, 140, 220, 222), incluant la modification du signal de sélection de voie.

6. Appareil (102, 122, 142, 210, 212) selon la revendication 5, dans lequel le circuit de commande (212, 310) est en outre conçu pour:
en réponse au lancement d'une transmission WPT en mode basse puissance vers le récepteur WPT (100, 120, 140, 220, 222), transmettre (510) des informations identifiant le niveau de puissance déterminé de la source d'alimentation (202, 204) au récepteur WPT (100, 120, 140, 220, 222).

7. Appareil (102, 122, 142, 210, 212) selon l'une quelconque des revendications 5 à 6, dans lequel le circuit de commande (212, 310) est en outre conçu pour:
en réponse à la modification du niveau de puissance WPT, recevoir (514) une demande d'optimisation de puissance provenant du récepteur WPT (100, 120, 140, 220, 222) qui sollicite une deuxième modification de la puissance WPT à transmettre sans fil au récepteur WPT (100, 120, 140, 220, 222), dans lequel la deuxième modification est une réduction de la tension de porteuse WPT; et
en réponse à la demande d'optimisation de puissance, provoquer (516, 518) la deuxième modification de la puissance WPT.

8. Appareil (100, 120, 140, 220, 222) destiné à un récepteur de transfert d'énergie sans fil (WPT), l'appareil (100, 120, 140, 220, 222) comprenant:
une sortie d'alimentation (402) agencée pour fournir de l'énergie électrique reçue par WPT à une charge (224);
un premier circuit de voie de réception (RX) (406A) agencé pour être couplé à la sortie d'alimentation (402) et à un premier ensemble d'au moins une bobine de réception (408A);
un deuxième circuit de voie RX (406B) agencé pour être couplé à la sortie d'alimentation (402) et à un deuxième ensemble d'au moins une bobine de réception (408A, 408B); et
un circuit de sélection de mode de réception (404) agencé pour coupler de manière sélective l'un parmi le premier circuit de voie RX (406A) et le deuxième circuit de voie RX (406B) entre la sortie d'alimentation (402) et le premier ou le deuxième ensemble d'au moins une bobine de réception (408A, 408B) en réponse à un signal de sélection de voie; et
un circuit de commande (410, 416) couplé de manière communicative au circuit de sélection de mode de réception (404), et conçu pour générer le signal de sélection de voie en fonction d'un besoin en puissance de la charge (224);
**caractérisé en ce que** l'un parmi le premier circuit de voie RX (406A) et le deuxième circuit de voie RX (406B) est conçu pour recevoir de manière sélective une transmission WPT provenant d'un émetteur WPT (102, 122, 142, 210, 212) en fonction du signal de sélection de voie;
dans lequel le premier circuit de voie RX (406A) est conçu pour recevoir la transmission WPT avec un rendement supérieur lorsque la WPT reçue est à un premier niveau de puissance par rapport à lorsque la WPT reçue est à un deuxième niveau de puissance; et
dans lequel le deuxième circuit de voie RX (406B) est conçu pour recevoir la transmission WPT avec un rendement supérieur lorsque la WPT reçue est au deuxième niveau de puissance par rapport à lorsque la WPT reçue est au premier niveau de puissance.

9. Appareil (100, 120, 140, 220, 222) selon la revendication 8, dans lequel le premier niveau de puissance est d'environ 5 W ou moins, et dans lequel le deuxième niveau de puissance est supérieur à environ 5 W.

10. Appareil (100, 120, 140, 220, 222) selon l'une quelconque des revendications 8 à 9, dans lequel le premier circuit de voie TX (406A) et le deuxième circuit de voie TX (406B) comprennent au moins une partie de circuit commune (407).

11. Appareil (100, 120, 140, 220, 222) selon l'une quelconque des revendications 8 à 10, dans lequel le premier circuit de voie RX (406A) comprend une capacité de dérivation aux bornes du premier ensemble d'au moins une bobine de réception (408A) qui fournit une caractéristique de résonance, et dans lequel le deuxième circuit de voie RX (406B) omet la capacité de dérivation à partir du deuxième ensemble d'au moins une bobine de réception (408A, 408B).

12. Appareil (100, 120, 140, 220, 222) selon l'une quelconque des revendications 8 à 11, dans lequel le premier ensemble d'au moins une bobine de réception (408A) et le deuxième ensemble d'au moins une bobine de réception (408A, 408B) comprennent une bobine de réception commune (408A).

13. Appareil (100, 120, 140, 220, 222) selon l'une quelconque des revendications 8 à 12, dans lequel le circuit de commande (410, 416) est agencé pour lire une mesure d'une tension au niveau de la charge (224) et d'un courant consommé par la charge (224).

14. Appareil (100, 120, 140, 220, 222) selon la revendication 13, dans lequel le circuit de commande (410, 416) est conçu pour générer en outre le signal de sélection de voie sur la base de la mesure de la tension et du courant.

15. Appareil (100, 120, 140, 220, 222) selon l'une quelconque des revendications 8 à 14, dans lequel le circuit de commande (410, 416) est agencé pour être couplé de manière communicative à un émetteur WPT (102, 122, 142, 210, 212), pour recevoir (528) des informations indiquant une puissance disponible à partir de l'émetteur WPT (102, 122, 142, 210, 212), et pour générer le signal de sélection de voie sur la base en outre de la puissance disponible à partir de l'émetteur WPT (102, 122, 142, 210, 212).
